# DEMANDE DE BREVET EUROPEEN

(11) **EP 3 002 059 A1**
(43) Date de publication de la demande: **06.04.2016**
(21) Numéro de dépôt: 15187303.1
(22) Date de dépôt: 29.09.2015
(51) Int. Cl.: B01J 37/02, B01J 38/48, B01J 23/22, B01D 53/94, B01J 37/34

(54) **PROCÉDÉ DE RÉGÉNÉRATION D'UN CATALYSEUR DE DÉNITRIFICATION**

(30) Priorité: 01.10.2014 FR 1459364
(71) Demandeur: LAB SA, 69007 Lyon (FR)
(72) Inventeur: SIRET, Bernard, 69200 VENISSIEUX (FR); TABARIES, Frank, 83430 SAINT MANDRIER SUR MER (FR)
(74) Mandataire: Grand, Guillaume

(57) **Abrégé**

Dans ce procédé de régénération d'un catalyseur de dénitrification, sous forme structurée et à principe actif métallique, les séquences suivantes sont successivement réalisées :
- une séquence de dépoussiérage (S1), dans laquelle le catalyseur à régénérer est débarrassé, par action mécanique, de poussières et/ou de sels déposés sur le catalyseur ;
- une séquence de chauffage (S2), dans laquelle le catalyseur issu de la séquence de dépoussiérage (S1) est porté à une température comprise entre 300 et 550°C de manière à détruire par oxydation et/ou désorber des composés organiques adsorbés sur le catalyseur ;
- une séquence de ré-imprégnation (S4), dans laquelle le catalyseur, issu de la séquence de chauffage (S2) puis refroidi, est mis en contact avec une solution contenant le ou les métaux du principe actif du catalyseur ; et
- une séquence de séchage et/ou calcination (S5), dans laquelle le catalyseur issu de la séquence de ré-imprégnation (S4) est porté à une température d'au moins 140°C pendant au moins deux heures.

## Description

La présente invention concerne un procédé de régénération de catalyseurs structurés à principe actif métallique, utilisés pour la dénitrification de fumées contenant des oxydes d'azote.

Lors de l'incinération, par exemple, de déchets ménagers, de biomasses ou de boues de stations d'épuration, les fumées issues de la combustion contiennent une quantité appréciable d'éléments nocifs, comme le chlorure d'hydrogène (HCl) et le dioxyde de soufre (SO₂), ainsi que des poussières, des métaux lourds et des composés organiques, tels que des dioxines, furanes ou composés aromatiques coplanaires. Ces fumées contiennent également des oxydes d'azote. Avant de pouvoir être rejetées à l'atmosphère, les fumées résultant de la combustion doivent être épurées. Il est habituel, pour de raisons de technologies, d'effectuer séparément les opérations de dénitrification de celles d'élimination des autres polluants.

Plusieurs technologies sont disponibles pour effectuer la dénitrification. Parmi elles, la dénitrification catalytique, dite SCR (anagramme de l'expression anglaise « selective catalytic reduction »), occupe une place de choix, tant pour ses performances en dénitrification, que pour sa capacité à aussi traiter les dioxines et les furanes. Dans cette technologie, les fumées à épurer passent à travers une unité contenant un réacteur catalytique ayant un principe actif typiquement métallique, tel que des oxydes métalliques, par exemple des oxydes de vanadium ou de tungstène, ce réacteur catalytique promouvant la réduction des oxydes d'azote par réaction avec de l'ammoniac ou avec un autre réactif.

Dans sa forme usuelle, il faut veiller à protéger le catalyseur contre un certain nombre de poisons et éviter la formation de sels, comme le bisulfate d'ammonium, qui encrassent les échangeurs et le catalyseur. Cette dénitrification SCR peut être placée en amont ou bien en aval des autres unités qui épurent les fumées des autres composants nocifs qu'elles contiennent initialement, comme les poussières et les oxydes de soufre. On peut choisir d'opérer la dénitrification à une température relativement élevée, par exemple entre 250 et 350°C, ou bien à une température relativement basse, par exemple entre 170 et 250°C. Une contrainte de ce procédé de dénitrification est que le réactif usuellement utilisé réagit avec les oxydes de soufre encore présents à ce niveau et peut déposer des sels comme le sulfite, le sulfate, le bisulfite ou le bisulfate d'ammonium, qui bloquent les pores du catalyseur. D'autres sels, par exemple des chlorures métalliques, peuvent également se déposer. Par ailleurs, les fumées peuvent aussi véhiculer des poisons, comme par exemple l'arsenic ou le phosphore, qui désactivent le catalyseur. Enfin, des composés organiques, issus de la combustion à l'origine des fumées, peuvent aussi se déposer et nuire au catalyseur.

On peut placer l'unité de dénitrification SCR en amont des autres unités assurant l'élimination des poussières et des gaz acides, comme des filtres et des laveurs, à un endroit où la température est encore élevée, ce qui permet d'économiser les réchauffeurs et échangeurs autrement nécessaires. En revanche, les fumées non traitées contiennent encore une quantité de poussières importante, ce qui oblige à minima à sélectionner un catalyseur à canal plus ouvert et interdit pratiquement l'utilisation d'un catalyseur en granulés. De plus, la teneur en oxydes de soufre, SO₂ et SO₃, encore importante, peut aggraver le risque de dépôt de sels sur les catalyseurs.

Pour cette raison, on choisit souvent de placer l'unité de dénitrification SCR en aval des laveurs et des filtres. Deux options s'offrent alors : travailler à une température plutôt élevée, par exemple entre 250 et 350°C, ou bien plutôt basse, par exemple entre 170 et 250°C. Si opérer à relativement haute température apporte une sécurité supplémentaire vis-à-vis de l'empoisonnement ou du dépôt de sels, il faut remonter la température des fumées, depuis celle où opèrent les laveurs précités, par exemple vers 65°C, ou bien les filtres précités, par exemple entre 120 et 200°C, jusqu'à la température de service de la dénitrification SCR. Une telle remontée en température oblige à installer des échangeurs récupérateurs de chaleur, qui sont coûteux et eux-mêmes sujets à encrassement par dépôt de sels. Opérer à basse température permet, au prix d'un volume supérieur de catalyseur, d'économiser les échangeurs récupérateurs et conduit à des investissements moindres, mais rend le catalyseur plus sensible aux poisons.

Dans tous les cas de figure, la perte d'activité du catalyseur, progressive et plus ou moins rapide, reste inéluctable. Il y a donc lieu de procéder à des régénérations régulières du catalyseur.

Pour les catalyseurs sous forme structurée, par exemple les catalyseurs en monolithes, les régénérations sont souvent effectuées hors ligne et plusieurs techniques correspondantes sont employées. En pratique, cette régénération peut être effectuée dans des usines spécialisées, après démontage et transport des modules de catalyseur structuré de l'unité de dénitrification SCR. Cette régénération est mise en oeuvre en procédant notamment à un soufflage ou à un lavage du catalyseur, suivi de son séchage. US 6 484 733, US 5 308 810, US 6 241 826 et WO 2000/01483 décrivent en détail de tels procédés de régénération. Une régénération en ligne, par un procédé purement thermique, a également été proposée par EP-2 422 877. Dans tous les cas, il est souvent nécessaire de régénérer chimiquement le catalyseur, par ré-imprégnation avec une solution contenant le principe actif du catalyseur, par exemple le vanadium, afin de redonner suffisamment d'activité au catalyseur régénéré.

Ainsi, DE-A-10 2009 000317, qui peut être considéré comme l'état de la technique le plus proche de la présente invention, propose de régénérer un catalyseur monolithique de dénitrification par ré-imprégnation avec une solution contenant les métaux du principe actif du catalyseur, cette ré-imprégnation étant suivie du séchage du catalyseur. Préalablement à la ré-imprégnation, DE-A-10 2009 000317 envisage de préparer le catalyseur à régénérer, en le dépoussiérant par soufflage d'air. De plus, afin de brûler des impuretés combustibles initialement présentes dans le catalyseur et/ou de transformer les cendres présentes en des morphologies plus faciles à enlever lors du soufflage de dépoussiérage, DE-A-10 2009 000317 évoque, de manière peu détaillée, la possibilité de, préalablement au dépoussiérage, traiter thermiquement le catalyseur à régénérer, en le portant à une température comprise entre 250°C et 1400°C en atmosphère oxydante : un tel traitement thermique est lourd à réaliser pour des valeurs de température élevées et sa mise en oeuvre semble peu réaliste au vu de sa finalité.

On peut aussi procéder à une régénération par chauffage in situ, c'est-à-dire en isolant un ou plusieurs modules de catalyseur structuré au sein de l'unité de dénitrification SCR puis en élevant la température de ce ou ces modules. Mais ceci ne suffit souvent pas, sans ré-imprégnation avec la solution ad hoc précitée, à redonner assez d'activité au catalyseur.

Par ailleurs, il est assez commun que les catalyseurs structurés de dénitrification soient, en service, exposés à des composés organiques, par exemple des acides gras ou des composés aromatiques. Du fait des températures d'utilisation du catalyseur pour dénitrifier des fumées, ces composés peuvent être partiellement pyrolysés. Il en résulte que le catalyseur développe un caractère franchement hydrophobe et que ses pores peuvent être partiellement colmatés : la régénération du catalyseur par ré-imprégnation ou lavage est alors compromise du fait que les solutions utilisées mouillent mal ce dernier et ne pénètrent pas dans ses pores.

Le but de la présente invention est de proposer un procédé de régénération d'un catalyseur de dénitrification, qui soit plus efficace, tout en étant facile à mettre en oeuvre.

A cet effet, l'invention a pour objet un procédé de régénération d'un catalyseur de dénitrification, sous forme structurée et à principe actif métallique, tel que défini à la revendication 1.

Ainsi, l'invention s'affranchit des difficultés de l'art antérieur, exposées plus haut, en proposant qu'un catalyseur structuré à régénérer soit d'abord dépoussiéré puis soumis à une élévation de température comprise entre 300 et 550°C, avant d'être, après refroidissement, soumis à l'action chimique d'une solution de ré-imprégnation contenant le principe actif métallique du catalyseur, puis séché et/ou calciné. Une des idées à la base de l'invention est d'assurer au catalyseur à régénérer le bénéfice de l'action chimique de la solution de ré-imprégnation, en le chauffant préalablement de telle sorte que les composés organiques, qui ont été adsorbés sur le catalyseur lors de son utilisation et dont le catalyseur n'a pas été débarrassé par l'action mécanique de son dépoussiérage, sont désorbés ou détruits par oxydation. Autrement dit, grâce à cette séquence de chauffage, on corrige le caractère hydrophobe du catalyseur à régénérer, résultant de la présence de ces composés organiques, et on permet à la solution de ré-imprégnation de pénétrer le catalyseur jusque dans ses pores. En pratique, la séquence de chauffage s'intègre facilement entre la séquence de dépoussiérage et la séquence de ré-imprégnation, en étant avantageusement mise en oeuvre à l'aide d'équipements communément disponibles, tels qu'un four ou un flux d'air chaud. On notera que l'ordre des séquences du procédé conforme à l'invention est important : il faut procéder d'abord au dépoussiérage initial du catalyseur, sans quoi une élévation de température risque d'induire une fusion des espèces fusibles présentes, tels que des sels eutectiques, ce qui créerait une sorte de glacis ou de vernis, bloquant les pores du catalyseur et/ou collant les poussières au catalyseur. On comprend donc qu'il ne faut surtout pas d'abord chauffer le catalyseur, ne serait-ce qu'à une température de 250°C ou plus, avant d'avoir dépoussiéré mécaniquement le garnissage de structure du catalyseur. Par la suite, la ré-imprégnation pourra être réalisée de manière satisfaisante dans la mesure où elle est mise en oeuvre après le soufflage suivi de la destruction thermique des espèces hydrophobes, puis du refroidissement du catalyseur.

Des caractéristiques additionnelles avantageuses du procédé de régénération conforme à l'invention sont spécifiées aux revendications dépendantes.

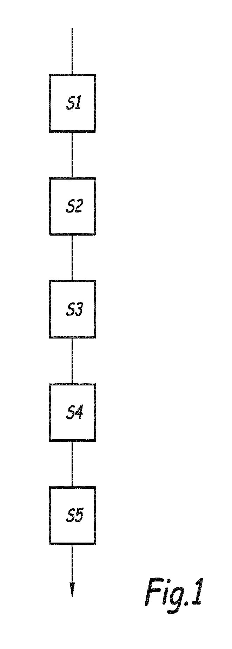

L'invention sera mieux comprise à la lecture de la description qui va suivre, donnée uniquement à titre d'exemple et faite en se référant à la figure 1 qui est un organigramme montrant des séquences d'un procédé de régénération conforme à l'invention.

Sur la figure 1 sont représentées cinq séquences temporelles S1 à S5, auxquelles est successivement soumis un catalyseur à régénérer, en étant mises en oeuvre par une installation ad hoc.

En pratique, le catalyseur à régénérer est sous forme structurée, telle qu'en monolithes, par exemple en canaux ou en nids d'abeille, une forme en plaques ou bien une forme associant des plaques entre lesquelles un mur de forme sinusoïdale est intercalé, et ce de manière non limitative. Cette forme structurée du catalyseur exclut des catalyseurs pulvérulents ou en granulés.

Le catalyseur à régénérer comprend un substrat, par exemple majoritairement de l'oxyde de titane, et un principe actif métallique, notamment un oxyde ou un mélange d'oxydes métalliques, par exemple un oxyde de vanadium, tel que V₂O₅, ou un oxyde de tungstène, tel que WO₃, de manière non limitative. Ce catalyseur est, en tant que tel, connu de l'homme de l'art comme catalyseur de dénitrification SCR.

Selon le procédé de l'invention, le catalyseur est d'abord soumis à la séquence S1 dite de dépoussiérage. Ce dépoussiérage peut être réalisé par soufflage, avec de l'air ou de la vapeur sèche, à chaud ou à froid, ou de toute autre façon. Pour ce faire, l'installation de mise en oeuvre du procédé comprend par exemple des buses de soufflage. Dans tous les cas, ce dépoussiérage est prévu pour débarrasser, par action mécanique, le catalyseur de la plus grande partie des poussières et des sels non fortement adhérents, qui sont déposés sur ce catalyseur : à défaut d'être retirés, ces dépôts nuiraient à l'activité du catalyseur et pourraient interférer avec les séquences suivantes du procédé de régénération.

La séquence de dépoussiérage S1 peut être conduite in situ, c'est-à-dire alors que le catalyseur est laissé en place dans l'unité de dénitrification SCR où il opère normalement pour dénitrifier des fumées, ou bien ex situ, c'est-à-dire alors que le catalyseur a préalablement été sorti de son unité de dénitrification.

Selon l'invention, le catalyseur issu de la séquence S1 est ensuite porté, lors de la séquence S2, en milieu oxydant, tel que l'air, à une température suffisante pour désorber ou détruire par oxydation les composés organiques qui y sont adsorbés. Ces composés organiques s'accumulent au fur et à mesure du service du catalyseur et constituent une barrière, de par leur caractère hydrophobe, à la pénétration d'une solution de régénération chimique, jusque dans les pores du catalyseur. Il est important de comprendre que, sans cette séquence de chauffage S2, les séquences suivantes du procédé de régénération seraient mises en oeuvre alors qu'un environnement hydrophobe existerait sur le catalyseur et empêcherait une solution de régénération, telle que celle décrite plus loin dans la séquence S4, d'atteindre les pores et les sites à réactiver du catalyseur, ce qui priverait le catalyseur du bénéfice des séquences suivantes, notamment de la séquence S4.

On comprend que la séquence de chauffage S2 doit porter la température du catalyseur à une valeur suffisamment haute pour désorber ou oxyder/brûler les composés organiques, mais pas trop élevée pour au moins deux raisons :
- une température de chauffage trop élevée fait courir le risque d'un frittage du catalyseur (connu sous le terme anglais « sintering »), ainsi que le risque de migrations d'espèces et de réorganisation des composants actifs du catalyseur en clusters, détruisant ainsi la structure bien dispersée initiale et réduisant considérablement l'activité du catalyseur ; et
- dans la mesure où des espèces assez fusibles telles que des sels eutectiques, formés par exemple de sulfates et d'hydrogénosulfates d'ammonium et/ou des sels mixtes de sodium, potassium, zinc et plomb, peuvent avoir été déposés sur le catalyseur à régénérer, le chauffage de ces derniers à une température trop haute va entraîner la fonte de ces espèces fusibles, formant alors, dans le catalyseur, une sorte de glacis bouchant les pores du catalyseur.

La température à laquelle est porté le catalyseur lors de la séquence de chauffage S2 doit ainsi être comprise entre 300°C et 550°C, en étant préférentiellement appliquée au catalyseur pendant au moins trente minutes.

Pour mettre en oeuvre la séquence de chauffage S2, l'installation précitée comprend un four, à l'intérieur duquel le catalyseur est placé pour être chauffé, ou un dispositif qui fait circuler de l'air chauffé à travers le catalyseur.

De manière optionnelle, le catalyseur issu de la séquence S2 est, après refroidissement, soumis, lors de la séquence S3, à un lavage à l'eau, qui a pour but d'éliminer des sels solubles, par exemple des sulfates, qui pourraient interférer avec les séquences suivantes. Ce lavage permet aussi de réduire la contamination de la liqueur de régénération résultant de la mise en oeuvre de la séquence suivante S4, et en facilite le réemploi ou le recyclage. En lieu et place de l'eau, il est possible d'utiliser une solution basique dans la mesure où cette dernière ne contient ni sodium, ni potassium. Une solution ammoniacale ou de carbonate d'ammonium convient.

Pour mettre en oeuvre la séquence de lavage S3, l'installation précitée comprend une cuve, une pompe et des buses de pulvérisation, ou bien une cuve de trempage.

Selon l'invention, le catalyseur, qui est issu de la séquence de lavage S3 ou bien qui est issu directement de la séquence de chauffage S2 et refroidi, est ensuite soumis, dans la séquence S4, à une mise en contact avec une solution liquide contenant des sels des métaux du principe actif du catalyseur, par exemple un vanadate ou un métavanadate pour le cas du catalyseur au vanadium. Cette séquence de ré-imprégnation S4, qui, isolément, est connue en soi, est par exemple réalisée en faisant ruisseler la solution précitée, chaude ou froide, dans les canaux du catalyseur, ou bien en faisant tremper le catalyseur dans un bain de cette solution. L'installation précitée comprend à cet effet une cuve, une pompe et des buses de pulvérisation, ou bien une cuve de trempage. Cette séquence de ré-imprégnation S4 dure en général entre une et six heures. A titre d'exemple, dans le cas où le catalyseur à régénérer est un catalyseur au vanadium, la solution utilisée est une solution de vanadate d'ammonium, à pH compris entre 2,5 et 4,5 et à une concentration de 3 à 10 g/l exprimée en vanadium.

Selon l'invention, le catalyseur issu de la séquence S4 est enfin soumis à la séquence S5 dite de séchage et/ou calcination. Le but de cette séquence S5 est de redonner au catalyseur sa solidité mécanique et, le cas échéant, de convertir en oxydes actifs les sels métalliques du principe actif, par exemple les sels de vanadium, déposés sur le catalyseur lors de la séquence S4. La séquence S5 peut comporter des étapes portant, par rampes et paliers, le catalyseur à diverses températures, toujours inférieures à 550°C. A titre d'exemple, on peut porter le catalyseur d'abord à 110°C pendant deux à huit heures, puis à une température comprise entre 400 et 550°C pendant deux à quatre heures. D'autres étapes de séchage/calcination sont possibles, par exemple en laissant d'abord le catalyseur sécher à l'air ambiant, avant de le chauffer, ou bien en le soumettant à une rampe de températures. L'essentiel est qu'à la fin de cette séquence S5, le catalyseur soit parfaitement sec et solide et que le principe actif soit sous sa forme finale. A minima, lors de cette séquence S5, le catalyseur est porté à une température de 140°C pendant deux heures. Ceci étant, la température adéquate, qui peut être supérieure à 140°C, et la durée adéquate, qui peut être supérieure à deux heures, sont celles qui assurent que, à l'issue de la séquence S5, les métaux déposés sur le catalyseur lors de la séquence de ré-imprégnation S4 sont sous leur forme active d'oxydes.

Pour mettre en oeuvre la séquence de séchage et/ou calcination S5, l'installation précitée comprend, par exemple, un four, une étuve ou un dispositif apte à faire circuler de l'air chaud à travers le catalyseur.

A la fin de la séquence S5, le catalyseur est prêt à être réemployé au sein d'une unité de dénitrification SCR.

## Revendications

1. Procédé de régénération d'un catalyseur de dénitrification, sous forme structurée et à principe actif métallique,
dans lequel les séquences suivantes sont successivement réalisées :
- une séquence de dépoussiérage (S1), dans laquelle le catalyseur à régénérer est débarrassé, par action mécanique, de poussières et/ou de sels déposés sur le catalyseur ;
- une séquence de chauffage (S2), dans laquelle le catalyseur issu de la séquence de dépoussiérage (S1) est porté à une température comprise entre 300 et 550°C de manière à détruire par oxydation et/ou désorber des composés organiques adsorbés sur le catalyseur ;
- une séquence de ré-imprégnation (S4), dans laquelle le catalyseur, issu de la séquence de chauffage (S2) puis refroidi, est mis en contact avec une solution contenant le ou les métaux du principe actif du catalyseur ; et
- une séquence de séchage et/ou calcination (S5), dans laquelle le catalyseur issu de la séquence de ré-imprégnation (S4) est porté à une température d'au moins 140°C pendant au moins deux heures.

2. Procédé suivant la revendication 1, dans lequel, au cours de la séquence de chauffage (S2), le catalyseur est porté à une température comprise entre 300 et 550°C pendant au moins trente minutes.

3. Procédé suivant l'une des revendications 1 ou 2, dans lequel, entre la séquence de chauffage (S2) et la séquence de ré-imprégnation (S4), est réalisée une séquence de lavage (S3) dans laquelle le catalyseur, issu de la séquence de chauffage (S2) puis refroidi, est lavé à l'eau ou bien avec une solution basique ne contenant ni sodium, ni potassium, la séquence de ré-imprégnation (S4) étant mise en oeuvre avec le catalyseur issu de la séquence de lavage (S3).

4. Procédé suivant l'une quelconque des revendications précédentes, dans lequel, au cours de la séquence de dépoussiérage (S1), de l'air ou de la vapeur sèche est soufflé à travers le catalyseur.

5. Procédé suivant l'une quelconque des revendications précédentes, dans lequel, au cours de la séquence de chauffage (S2), le catalyseur est porté à une température comprise entre 300 et 550°C à l'intérieur d'un four.

6. Procédé suivant l'une quelconque des revendications 1 à 4, dans lequel, au cours de la séquence de chauffage (S2), le catalyseur est porté à une température comprise entre 300 et 550°C en faisant circuler de l'air chauffé dans le catalyseur.

7. Procédé suivant l'une quelconque des revendications précédentes, dans lequel le catalyseur à régénérer est à base de vanadium, et dans lequel la solution utilisée lors de la séquence de ré-imprégnation (S4) contient un sel de vanadium, à une concentration comprise entre 3 et 10 g/l, exprimée en vanadium, et à pH compris entre 2,5 et 4,5.

8. Procédé suivant l'une quelconque des revendications précédentes, dans lequel au cours de la séquence de séchage et/ou calcination (S5), le catalyseur est séché à l'air ambiant puis est chauffé à au moins 140°C dans un four ou une étuve.
